Europäisches Patentamt

European Patent Office

Office européen des brevets

(11) Publication number: **0 250 105**
**A1**

## EUROPEAN PATENT APPLICATION

(21) Application number: 87304601.5

(22) Date of filing: 22.05.87

(51) Int. Cl.⁴: **G01S 5/02** , **H04Q 7/04**

(30) Priority: 22.05.86 GB 8612561

(43) Date of publication of application:
23.12.87 Bulletin 87/52

(84) Designated Contracting States:
DE FR GB IT NL SE

(71) Applicant: SIGNAL PROCESSORS LIMITED
Cambridge Science Park Milton Road
Cambridge CB4 4GJ(GB)

(72) Inventor: Barton, Stephen Kingsley
5 Pieces Lane
Waterbeach Cambridge CB5 9NF(GB)

(74) Representative: Beresford, Keith Denis Lewis
et al
BERESFORD & Co. 2-5 Warwick Court High
Holborn
London WC1R 5DJ(GB)

(54) Radio location and apparatus.

(57) A radio location apparatus for use with a communication system, utilizes a wide-band ranging message having a frequency spectrum of widely spaced narrow spikes (38) comb like structure which fits between the channels (28) of the voice communications system.

The system may be a cellular radio system.

The system may also be a satellite communication system, in which case, the wide band message gives a high resolution but ambiguous indication of location. In order to resolve the ambiguity, the satellite sytem utilizes a narrow band ranging message for obtaining an unambiguous low resolution fix.

FIG.4

## RADIO LOCATION METHOD AND APPARATUS

This invention relates to a method and apparatus for radio location. Such a method and apparatus may be employed for example with a satellite communication system. Another such method and apparatus may be employed for example with a cellular radio system.

As is well known, a navigational fix may be obtained by measuring the time taken for a ranging message to travel from a vehicle requiring the fix to each of a plurality of stations at fixed positions, such as satellites in geostationary orbit. In known such radio location systems an unambiguous fix of high resolution can only be obtained utilising ranging messages having a wide band and substantially continuous frequency spectrum which messages accordingly make uneconomic use of available frequency bands.

The object of the invention is provide a radio location system in which economic use of available frequency bands is made. In a preferred form, the invention is applied to a communication system having a plurality of channels, such as for voice communication, and utilises the frequency band of that communication system for obtaining a navigational fix.

The invention is described further by way of example with reference to the accompanying drawings, in which:

Figure 1 illustrates an arrangement of satellites in a communication system in which the invention may be embodied;

Figure 2 is a functional block diagram of a station of the system of Figure 1, incorporating an embodiment of the invention;

Figure 3 is a functional block diagram of a base station of the system of Figure 1, incorporating an embodiment of the invention;

Figure 4 is a frequency spectrum diagram of the system of Figures 1 to 3:

Figure 5 is a schematic diagram illustrating cells of a cellular radio system;

Figure 6 is a schematic block diagram of mobile transmitter/receiver of the radio system in accordance with the invention, and

Figure 7 is a schematic block diagram of a base station of the radio system in accordance with the invention.

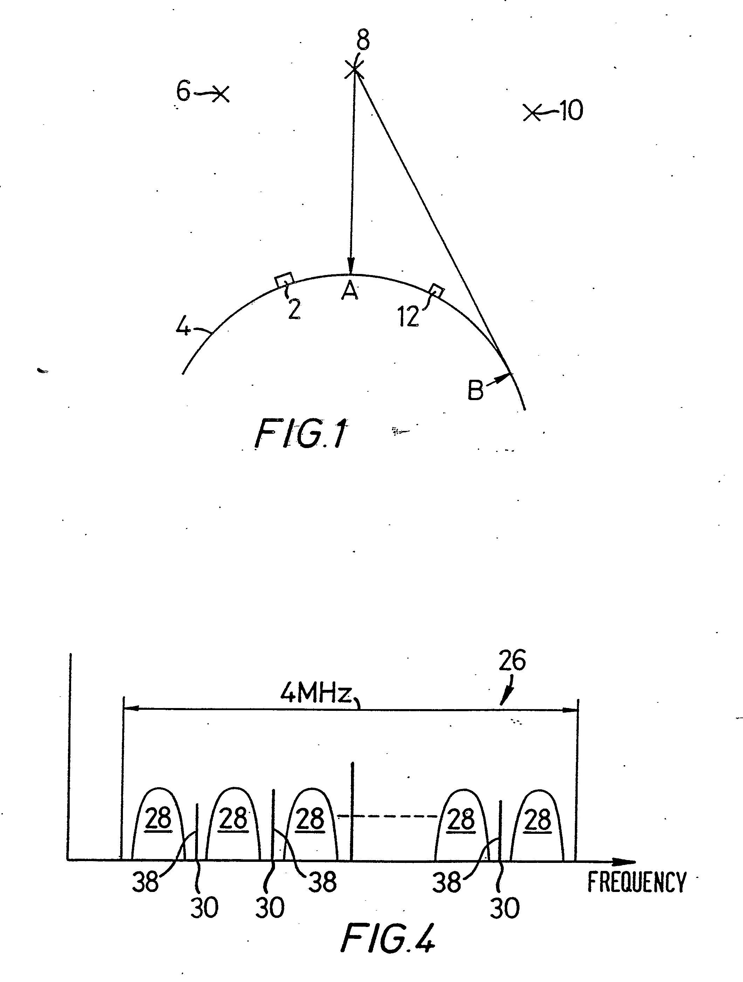

With reference to Figure 1, a communication system in which the invention may be embodied comprises a base station 2 at a fixed position on the surface of the earth 4, a plurality of satellites 6, 8, 10 (only three being shown although more may be provided), and a plurality of mobile stations carried on sea-borne vehicles, of which one is indicated at 12.

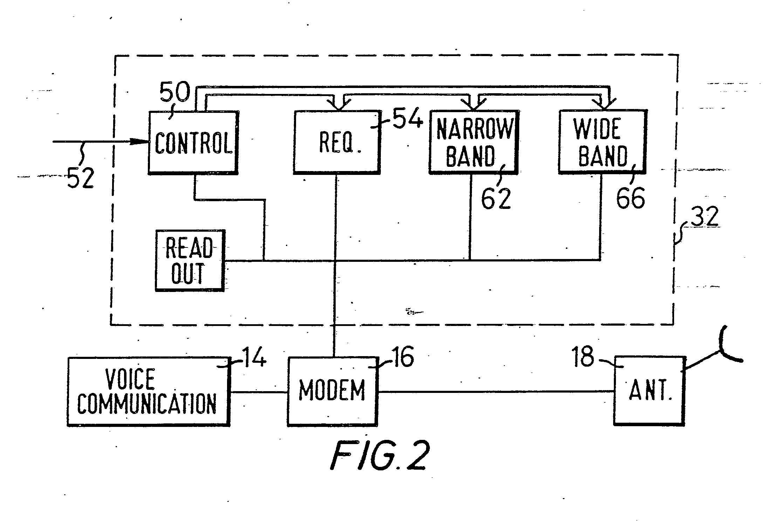

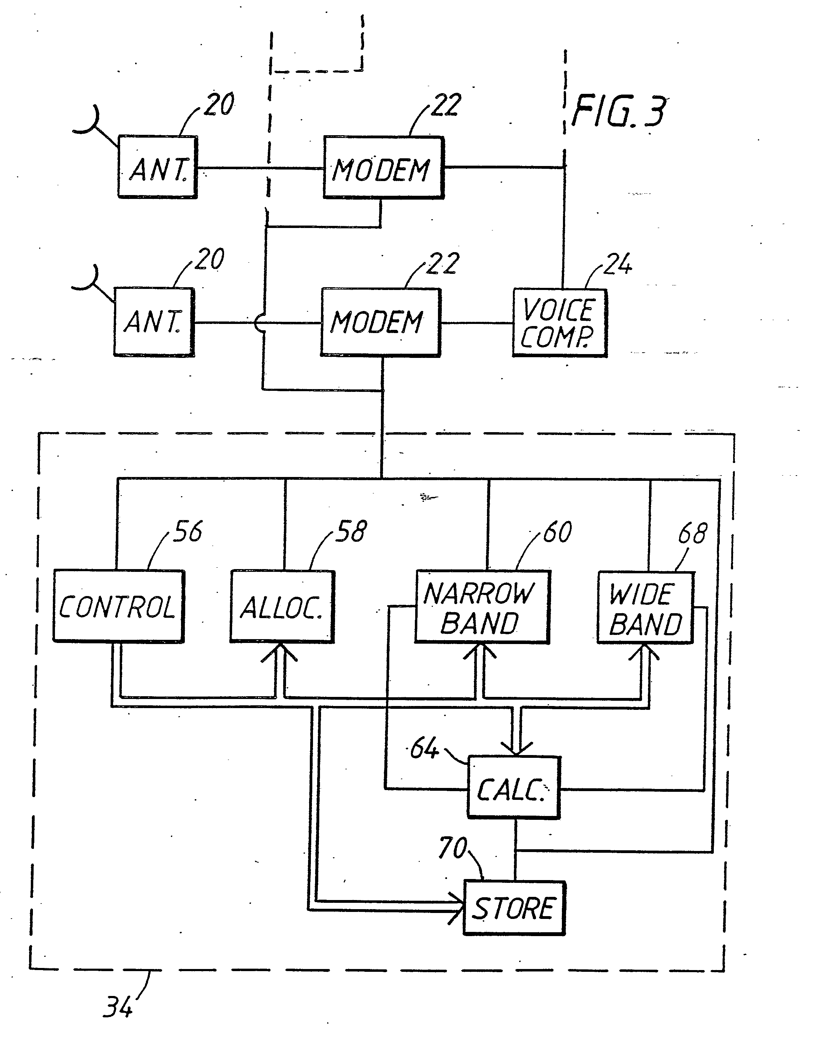

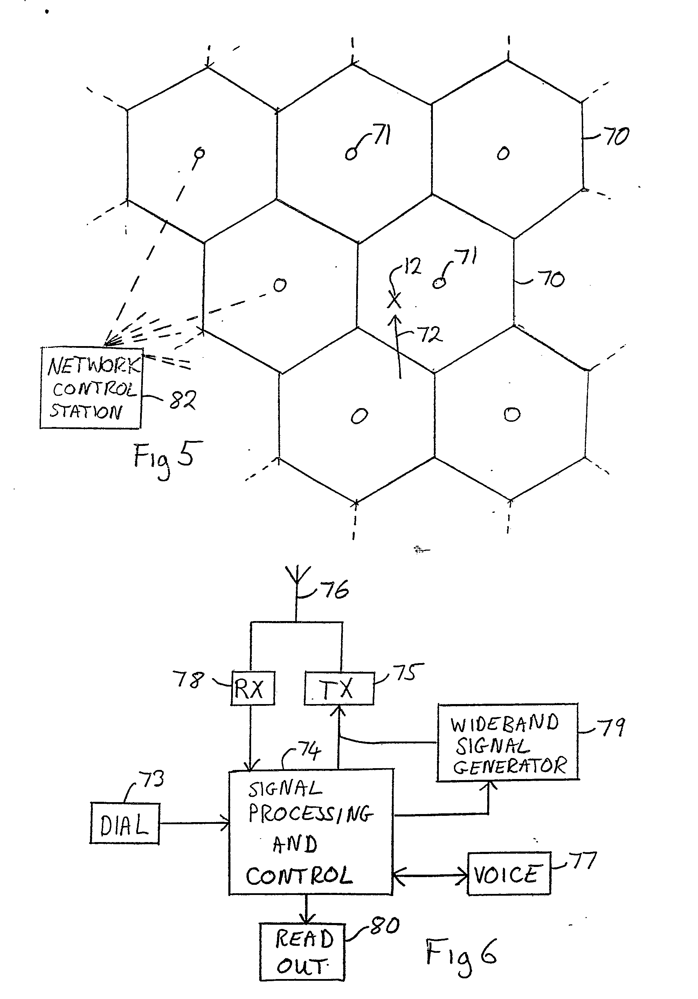

As shown in Figure 2, the mobile station comprises conventional voice communication circuitry 14 coupled via a modem 16 (and other conventional circuitry not shown) to a directional antenna 18 for the transmission and reception of voice communication signals to and from land-based public telephone systems via the satellites and the base station 2. As shown in Fig. 3, the base station includes a number of narrow beam width antennae 20, one for each satellite, coupled via respective modems 22 (and other conventional circuitry not shown) to voice communication circuitry 24 which is connected to the public switched telephone network. For the purpose of this communication, the system is assigned a band of frequencies which, in the example under discussion, will be taken to have a bandwidth of 4 MHz. This frequency band is indicated in Figure 4 at 26 and, in the example under discussion, provides for a number of voice communication channels 28 so spaced as to leave guard bands 30 between them. When one of the mobile stations wishes to make a telephone call, it sends a request signal to the base station which then assigns one of the vacant voice channels 28 for this purpose. This operation is entirely conventional and need not be described further.

For the purpose of obtaining a navigational fix utilising radio location techniques, the mobile station 12 is provided with a navigational device 32 which is coupled to the modem 16 and the base station 2 is provided with a navigational device 34 which is coupled to the modem 22, in accordance with a preferred embodiment of the invention.

When a station 12 requires a navigational fix, an appropriate instruction is input to control circuit 50 on line 52 and this causes circuit 54 to generate a request signal which is transmitted to the base station 22 via the modem 16, antenna 18 and the satellites. This navigational request signal is received by one of the antennae 20 and modems 22 and supplied to the navigational unit 34. In response to the receipt of the navigational request signal, control circuit 56 of unit 34 instructs circuit 58 to allocate a vacant one of the channels 28. Circuit 60 then generates a narrow band ranging message which is transmitted to a selected one of the satellites, say satellite 8, via the associated antenna 20 and modem 22. The satellite 8 retransmits the ranging message in the allocated channel 28 to the mobile station 12 which has requested the fix. Following receipt of the ranging message, control circuit 50 causes circuit 62 to regenerate and retransmit the narrow band ranging message after a short fixed delay. The retransmitted ranging message is received by the satellite 8), and the satellite 8 retransmits it back to the base station 2 in which it is supplied to a calculation circuit 64. The narrow band ranging messages are transmitted repeatedly, for a predetermined time, by the base station.

Each satellite can only communicate with the stations in the direct line of sight. In Figure 1, the nearest point to the satellite 8 on the earth's surface is point A and the most distant point on the earth's surface in the direct line of sight from the satellite 8 is the point B which is on a circle centered at point A. The distance from point A to the satellite 8 is approximately 36,000 km and the distance from point B to satellite 8 is approximately 42,000 km. The mobile station 12 is shown in Figure 1 as being at a position somewhere between points A and B so that the round-trip time taken for a ranging message to travel from the satellite 8 to the station 12 and back to the satellite 8 will be between 240 milliseconds and 280 milliseconds plus the above mentioned short fixed delay, dependent upon the actual position of the station 12. Thus, the round-trip time is an indication of the position of the station 12 between the point A and the circle on which point B lies. As the maximum variation in the round-trip time is 40 milliseconds, the repetition rate of the ranging message should be no greater than 25 Hz (i.e. no more than one ranging message every 40 milliseconds) to avoid ambiguity in the location of the station 12. Thus, the above mentioned repetition rate of the narrow band ranging message is approximately 25 Hz.

After a number of repetitions of the narrow band ranging message transmitted between the stations 2 and 12 via the satellite 8, the procedure is repeated utilising one or more of the other satellites so that the calculation circuit may obtain a fix on the station 12 in known manner. However, the narrow band ranging messages can only provide a fix of low resolution, although this fix is unambiguous. In order to obtain the required high resolution, the control circuit 56 is arranged to cause circuit 68 to generate a wide band ranging message which is so constructed and repeated that its spectrum comprises a series of widely spaced narrow spikes 38 which fit in the guardbands 30 between the channels 28. Thus, the wide band ranging message has a frequency spectrum of comb structure. In achieving this structure, the wide band ranging message is repeated at a frequency equal to the spacing between the voice signal guardbands, eg. 25 KHz, or once every 40 microseconds. Accordingly, this signal alone, whilst providing high resolution, would not provide an unambiguous fix. The resolution of the narrow band signal is sufficient to resolve the ambiguity of the wideband fix. As with the narrow band ranging message, the wide band ranging message is firstly repeatedly transmitted from the base station 2 via a selected one of the satellites, such as satellite 8 to the mobile station 12 where it is received and re-transmitted after a short fixed delay by circuit 66 under control of control circuit 50 so that the round-trip time between satellite 8 and station 12 may be measured in calculation circuit 64. After a number of repetitions, the process is repeated using one or more of the other satellites. Thus, the calculation circuit 64 obtains an unambiguous low resolution fix using the narrow band ranging messages and achieves high resolution using the wide band ranging messages. The resulting fix may be transferred to store 70 from which it may be read out and transmitted to the station 12 and/or otherwise used.

By way of numerical example, the wide band ranging message may have a chip rate of 3.175 MHz and a sequence length of 127 chips, thus giving a repetition rate of 25 KHz. The total band width of such a signal would be 6.35 MHZ but the end portions may be filtered out. The time resolution which can be achieved with such a signal is 0.03 microseconds which is equivalent to a resolution of 10 metres in the round trip distance between the satellite and the station 12 which, in turn, allows a resolution of approximately 5 metres in the one-way distance.

The narrow band signal may comprise the same sequence as the wide band signal but having a chip rate of 3.175 KHz giving a band width of 6.5 KHz.

Accordingly, it will be seen that in the preferred embodiment, an accurate fix is obtained by transmitting a narrow band ranging signal which provides an unambiguous fix but with low resolution and a wide band ranging message which provides the required high resolution but with 1000 fold ambiguity, which is resolved by the narrow band signal. The wideband signal could not alone provide an unambiguous fix. Further, in the preferred embodiment, both of these signals are transmitted and the fix obtained utilising an existing satellite communication system without the need for the allocation of any special frequency band whatsoever. Thus, in accordance with the invention, the apparatus 32 and 34 may be manufactured separately from the apparatus incorporated in the satellite communication system, if desired, and may be supplied as an accessory to the existing system.

Although the navigational units 32 and 34 shown in Figures 2 and 3 have been illustrated in block diagram form, it should be understood that these blocks do not necessarily represent individual pieces of hardware. On the contrary, these blocks are merely intended to indicate the functions to be performed in these units. Such functions may be provided by hardware or software or a combination of both.

Examples of satellite communication systems to which the invention may be applied are the INMARSAT system and the SPADE system.

Various modifications are possible within the scope of the invention. For example, it may be that the communication system is such that, if not all of the channels 28 are in use, some of the channels in use will be displaced relative to the positions shown in Figure 4 so that some of the spikes shown in Figure 4 will in fact be within one or more of the channels in use. In this case, means may be provided in the apparatus 34 for indicating such displaced channels and means may be provided in the apparatus 32 for filtering or cancelling out those spectral lines 38 which coincide with the displaced communication channels, the transmitted lines 38 being within the guardbands as described.

Though it is convenient that the low resolution ranging signals 42 should be transmitted within a single one of the channels 28, this is not essential. For example, a special narrow frequency band outside the band 26 might be allocated, although this is not preferred.

As a further alternative, some completely separate means could be provided for giving the unambiguous low resolution fix whilst utilising wide band ranging messages, such as signals 40, to obtain the required high resolution.

Although in the embodiment as described, the narrow band signal has been transmitted first, this is not essential and, alternatively, it would be possible to transmit the wide band signal first and the narrow band signal second.

Further, it would be possible for the narrow band and wide band ranging messages to be generated simultaneously or substantially simultaneously.

Although the embodiment as described has been one in which ranging messages are transmitted from the base station via the satellites to the stations requiring the fix, the invention may be embodied in other types of system, for example those in which the ranging messages would be originated by the stations requiring the fix; systems using omni-directional mobile antennas, where the return signal from mobile to base is relayed by all satellites simultaneously, discriminated by angle of arrival at base station antennas and all ranges calculated at one; or systems in which mobile does not retransmit signals at all but calculates its own position on time differences of message received from base station via multiple satellites. Further, although the invention has been described in connection with the satellite communication systems, it may be utilised in systems not involving satellites, such as a cellular radio system as will now be described with reference to Figures 5 to 7.

Cellular radio systems are well known. In a cellular radio system, an area is divided into cells 70 with which base station 71 are associated. In the example shown in Figure 5 each cell has one base station approximately in the centre of the cell. Each base station broadcasts and receives via an omni-directional antenna. The system is controlled by, e.g. a network control station 82 linked to the base station 71. As will be appreciated by those skilled in the art, other arrangements of cells and base stations are known in the art.

The frequencies of the cellular radio system are arranged in the manner shown in Figure 4, that is within an overall band width of e.g. 4 mega hertz, a plurality of communication channels each having a band width of e.g 25 kilo hertz are separated by guard bands 30. Different radio systems may have different channel band widths and over-all system band widths. As a mobile 12 moves from one cell into another cell as indicated by arrow 72 in Figure 5, the communication channel allocated to that mobile is changed (if necessary) to avoid two mobiles in the same cell (or in adjacent cells) communicating on the same channel. In order to do this, the system, in particular the "hand-off control" in the network control station, automatically tracks the positions of the mobiles to the extent that it is known which of the cells each mobile is in. Thus the position of each mobile is known to the system to a resolution of one cell area. The manner of operation of such a cellular radio system and the equipment required to operate it are well known in the art.

The embodiments of the invention described above with reference to Figures 1 to 4 are, in this application of the invention, modified to be used with a cellular radio system.

Firstly, the narrow band signal used above to resolve range ambiguities is not needed because the approximate position of each mobile is known to the cellular radio system.

Secondly, it is not necessary for wide band ranging signals to be both transmitted from a base station to a mobile and transmitted back from the mobile to the base station. Instead, a wide band ranging signal is transmitted only from the mobile. The wide band ranging signal is so constructed and repeated that its spectrum comprises a series of spikes 38 which fit in the guard bands 30 between the channels 28 as shown in Figure 4. The wide band ranging signal is detected by three base stations 71 nearest to the mobile and the position of the mobile is computed from the differences in the times of arrival of the ranging signal at the three base stations. The manner of performing that computation is known in the art of radio location.

The manner in which the cellular radio position fixing system operates is as follows.

It should be borne in mind that to a user, the cellular radio system appears to operate as if it were a telephone system. In order to make a call, the user dials the number of the person he wishes to call. The system "knows" the identity of the mobile making the call.

1. A number, herein after called the fix request number, is allocated as the number to be dialled by all users wishing to establish their position.

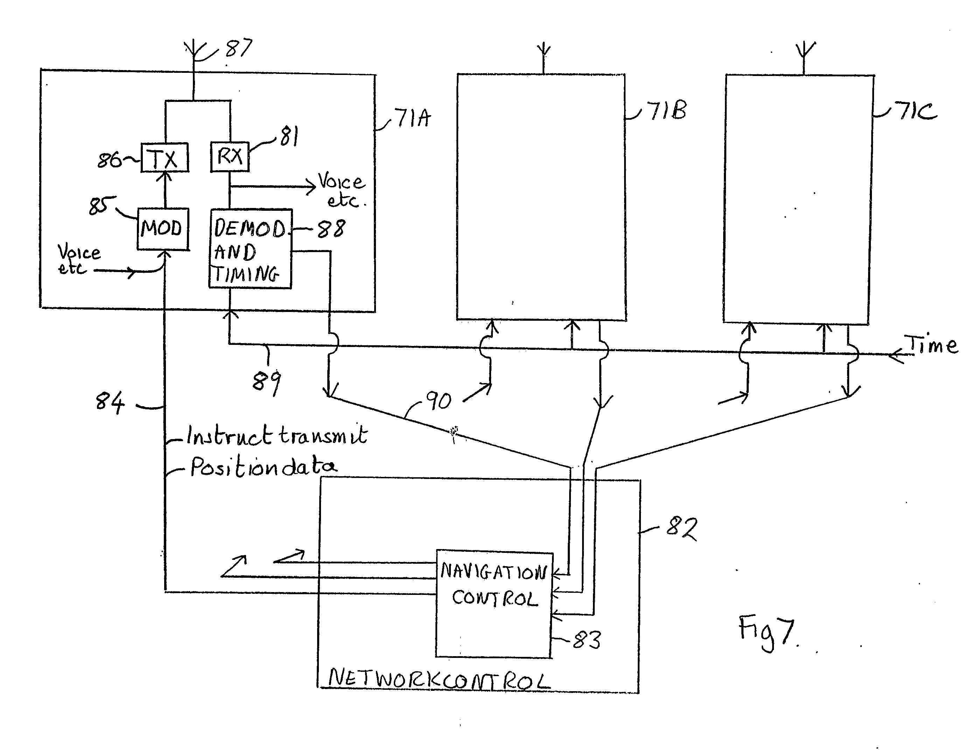

2. When the fix request number is dialled by the user, the system regards the dialling of that number as a request by the user to have their position established. The request is passed to a navigation control system (83 in Figure 7) which for example, is placed in the network control station 82 (see Figure 5). The navigation control system puts the user in a queue whilst checking with the cell hand-off control which cell that user is in. The user is put in a queue because any one base station 71 can handle only one position fixing request at a time from mobiles within the range of that base station.

3. When the navigation controller determines that the three base stations nearest to the mobile making the request are available for position fixing, it sends an instruction via the base station 71 nearest to the mobile instructing it to send a ranging message.

4. The ranging message is transmitted by the mobile and received by at least the three base stations nearest to the mobile and the position of the mobile is calculated using the differences in times of arrival of the ranging message at the base stations.

5. The user is informed of the position by the navigation controller transmitting to him via the nearest base station 71 data representing the user's position. At the same time, the system adds to the user's account the charge for dealing with the position fixing request.

6. If a ranging message is not received at three base stations, the mobile can be instructed to increase power and/or to increase the number of repetitions of the ranging message and try again without the user being aware that an attempt to fix his position has been made and failed.

It will be appreciated that owners of fleets of mobiles e.g. lorries or buses, could also use the cellular radio system in order to determine the positions of their mobiles. In such a case the fleet owner would indicate to the system the identity of each mobile whose position is to be fixed. The system would put the request in the queue, and check the approximate position of the mobile as in 2 above. Steps 3 and 4, 5 and 6 above would be performed, with the modification that the fleet owner would be charged and the position information transmitted to him, not the mobile.

Figure 6 shows a schematic block diagram of a transceiver used in a mobile. In order to make a call, the user dials the number of the person or service he uses to contact using for example a keypad 73 and signal processing and control circuitry 74 respond to that number to transmit a control signal via a transmitter 75 and an antenna 76 to establish the communication link. Once the link has been established the user can talk into a microphone, the speech signals being processed and transmitted via the signal processing and control circuitry 74 and the transmitter 75. Voice and other control signals are received by the antenna 76 and a receiver 78 and passed to the signal processing and control circuitry 74. The voice signals are reproduced by a loudspeaker, the loudspeaker and the microphone being schematically indicated by the block 77. In order to implement the present invention the transceiver is modified by the addition of a wide band ranging signal generator 79. The form of a suitable generator for producing the wide band ranging signal comprising a series of spikes 38 which fit in the guard bands 30 between the channels 38 of the cellular radio system is known in the art. The generator is caused to selectively send the signal to the transmitter 75 in response to an instruction transmitted from the network control station 82 via the nearest base station 71 and received by the antenna 76 receiver 78 and signal processing and control circuitry 74.

The navigation control at the network control station transmits to the transceiver via the nearest base station 71, information representing the position of the mobile. That information is received by the antenna 76 receiver 78 and processed by the signal processing and control circuitry 74. For the purpose of presenting the information to the user, a visual display unit 80 controlled by the signal processing and control unit 74 may be provided. The data representing the position of the user at its simplest may be merely a map reference in which case the VDU could be e.g. a liquid crystal display for displaying the map reference. It is also possible to envisage that the position information could be presented as speech.

Thus, the only modification to a standard mobile transceiver could be merely the addition of the wide band signal generator responsive to an instruction from the signal processing and control unit 74. In addition, some form of visual display such as an LCD may be provided if such a display is not already provided in the transceiver. Some modification may be required to the signal processing and control unit such as additional logic and/or modified software.

Referring to figure 7 there is shown three base stations 71a, 71b and 71c coupled to a network control station 82. Referring to base station 71a, each station comprises an antenna 87 a transmitter 86, a receiver 81 and a modulator 85. All those items, and other items not shown are present, unmodified, in the base station. In order to implement the present invention, each base station is additionally provided with means 88 for determining the times of arrival of ranging signals at the base stations. For that purpose all the base stations receive via for example telephone lines 89 timing signals representing a standard time which is the same for all base stations. The means 88 which receives the ranging signal from the receiver 81 demodulates the ranging signal and compares its time of arrival with the standard time represented by the standard timing signal. Means 88 may include a delay lock loop as known in the art for demodulating the ranging signal and determining its time of arrival.

The base stations 71, 71b and 71c are identical. They are all coupled via suitable communication channels e.g. telephone lines 90 to the network control station 82. The network control station 82 is provided for the purposes of the present invention additionally with a navigation control unit 83 which may comprise a computer specifically for navigation control. Alternatively, the navigation control unit 83 may be implemented by computing equipment already present in the network control station in which case the only change to the network control station would be a modification of the software. The navigation control unit 83 calculates, in known manner, the position of the mobile using the differences in times of arrival of the ranging signals at the base station 71a, 71b and 71c and transmits via the base station e.g. 71a nearest to the mobile data representing the position of the mobile.

## Claims

1. Radio location apparatus for use with a communication system having a plurality of channels, the apparatus comprising means for generating ranging signals having a frequency spectrum which is such that the spectral lines thereof may fit between said channels.

2. Radio location apparatus for use with a communication system having a plurality of channels, the apparatus comprising means for receiving ranging signals having a frequency spectrum which is such that the spectral lines thereof may fit between said channels, and means for processing said ranging signals for obtaining fix information.

3. Communication apparatus comprising transmission and reception means for the transmission and reception of signals in any of a plurality of channels within a frequency band, said channels being separated from each other by guard bands, and radio location apparatus according to claim 1 or 2, said ranging signals having a frequency spectrum which is such that the spectral lines thereof fit within said guard bands.

4. Radio location apparatus for use with a communication system having a plurality of channels, comprising means for generating a wide band ranging signal having a frequency spectrum in which the spectral lines may fit between said channels and means for generating a narrow band ranging signal, said narrow band ranging signal providing an unambiguous low resolution fix sufficient to resolve the ambiguity of said wideband ranging signal, said wide band ranging signal providing high resolution.

5. Radio location apparatus for use with a communication system having a plurality of channels comprising means for receiving a wide band ranging signal having a frequency spectrum in which the spectral lines may fit between said channels and means for receiving a narrow band ranging signal, said narrow band ranging signal providing an unambiguous low resolution fix sufficient to resolve the ambiguity of said wideband ranging signal, said wide band ranging signal providing high resolution, and means for processing said received ranging signals to provide fix information.

6. Communication apparatus comprising transmission and reception means for the transmission and reception of signals in any of a plurality of channels within a frequency band, said channels being separated from each other by guard bands, and radio location apparatus according to claim 4 or 5, said wide band ranging signal having a frequency spectrum in which the spectral lines fit in said guard

7. Apparatus according to claim 4 or 6, wherein said generating means is operable to generate said wide band and narrow band ranging signals at different times.

8. Apparatus according to claims 4, 6 or 7, wherein said narrow band ranging signal is transmitted in one of said channels.

9. Radio communication apparatus for use, in a mobile, in a cellular radio system having a plurality of channels separated by guard bands, the apparatus including means for selectively generating a ranging signal the frequency spectrum of which comprises a plurality of spectral lines which fit within the said guard bands.

10. Apparatus for use in a cellular radio system having a plurality of channels separated by guard bands, the apparatus comprising:

means for receiving ranging signals having a frequency spectrum which is such that the spectral lines thereof fit within the said guard bands and means for processing the received signals to produce indications of their times of reception by the apparatus.

11. In a cellular radio system having a plurality of channels separated by guard bands,

at least one apparatus according to claim 9, a base station in each cell of the system, each base station comprising apparatus according to claim 10, and

means for processing the times of reception, by at least three of the base stations, of a ranging signal generated by the generating means, to provide information relating to the position of the generating means.

12. A method of locating a mobile in a cellular radio system, which has a plurality of channels separated by guard bands, the method comprising: transmitting from the mobile a ranging signal having a frequency spectrum comprising a plurality of spectral lines which fit within the guard bands, determining the times of arrival of the ranging signal at at least three base stations in respective cells of the system, and determining the position of the mobile from the said times of arrival.

13. A method according to claim 12, further comprising transmitting information relating to the said position of the mobile.

14. A method according to claim 12 or 13 comprising the step of transmitting from a base station to a mobile an instruction for causing the mobile to transmit the ranging signal.

FIG.1

FIG.4

*FIG.2*

FIG. 3

NETWORK
CONTROL
STATION — 82

Fig 5

Fig 6

RX — 78

TX — 75

WIDEBAND
SIGNAL
GENERATOR — 79

DIAL — 73

SIGNAL
PROCESSING
AND
CONTROL — 74

VOICE — 77

READ
OUT — 80

87

71A

86~ TX
85
MOD
Voice
etc
81 RX
Voice etc.
DEMOD AND TIMING 88

71B
71C

Time

89
84
90

Instruct transmit
Position data

82

NAVIGATION CONTROL
83

NETWORK CONTROL

Fig 7.

# EUROPEAN SEARCH REPORT

European Patent Office

Application number

EP 87 30 4601

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-C-3 426 851 (DEUTSCHE FORSCHUNGS- U. VERSUCHSANSTALT FÜR LUFT- U. RAUMFAHRT) <br> * figure 1; column 4, lines 54-62, claim 7; column 8, lines 43-50; figure 3, column 7, lines 54-60 * | 1,12 | G 01 S 5/02 <br> H 04 Q 7/04 |
| A | EP-A-0 141 994 (SIEMENS) <br> * figure 4, abstract * | 1 | |
| A | DE-A-3 029 466 (F. LEITL) <br> * figure 1, page 3, lines 10-13, claim 2 * | 4 | |
| P,A | US-A-4 596 988 (J.T. WANKA) <br><br> * figure 1, abstract * | | |

### TECHNICAL FIELDS SEARCHED (Int. Cl.4)

G 01 S 5/02
H 04 Q 7/04
H 04 B 7/26

The present search report has been drawn up for all claims

| Place of search | Date of completion of the search | Examiner |
|---|---|---|
| BERLIN | 21-08-1987 | BREUSING J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03.82